# EUROPEAN PATENT APPLICATION

(11) **EP 3 575 978 A1**
(43) Date of publication of application: **04.12.2019**
(21) Application number: 18873612.8
(22) Date of filing: 17.10.2018
(51) Int. Cl.: G06F 16/00, G10K 15/04

(54) **INFORMATION PROCESSING DEVICE, INFORMATION PROCESSING METHOD, AND PROGRAM**

(30) Priority: 31.10.2017 JP 2017210011
(71) Applicant: Sony Corporation, Tokyo 108-0075 (JP)
(72) Inventor: KANNO, Saya, Tokyo 108-0075 (JP); MAEDA, Yoshinori, Tokyo 108-0075 (JP)
(74) Representative: MFG Patentanwälte Meyer-Wildhagen Meggle-Freund Gerhard PartG mbB
(86) International application number: PCT/JP2018/038608
(87) International publication number: WO 2019/087779

(57) **Abstract**

The present technology relates to an information processing apparatus, an information processing method, and a program that can provide a space that can be satisfied by all of a plurality of users.

An analyzing unit analyzes a piece of sensing information obtained by sensing in an environment in which a plurality of users are present, and a response generating unit generates a response to at least any of the users depending on a result of analysis of the piece of sensing information. The present technology is applicable, for example, to a home use voice assistant device.

## Description

### Technical Field

The present technology relates to an information processing apparatus, an information processing method, and a program, and more particularly to an information processing apparatus, an information processing method, and a program that can provide a space that can be satisfied by all of a plurality of users.

### Background Art

In recent years, a home use voice assistant device (home agent equipment) is available that outputs a suitable response to a user depending on an instruction from the user, a status of the user, or the like. Some of the home agent equipment recommend a music piece by using information being not directly related to the music piece such as a time zone, a season, and position information in addition to the number of reproducing times of the music piece by a user and user's favorite artist or genre.

For example, Patent Literature 1 discloses a music piece recommendation system that recommends a music piece on the basis of a feeling of the user at that time.

### Citation List

### Patent Literature

Patent Literature 1: Japanese Patent Application Laid-open No.2016-194614

### Disclosure of Invention

### Technical Problem

However, the home agent equipment has output the response for a single user. Accordingly, in an environment in which a plurality of users are present, the home agent equipment couldn't output the response that all of a plurality of users can be satisfied.

The present technology is made in view of the above-mentioned circumstances, and it is an object of the present technology to a space that can be satisfied by all of a plurality of users. Solution to Problem

An information processing apparatus of the present technology includes an analyzing unit that analyzes a piece of sensing information obtained by sensing in an environment in which a plurality of users are present, and a response generating unit that generates a response to at least any of the users depending on a result of analysis of the piece of sensing information.

An information processing method of the present technology executed by an information processing apparatus includes analyzing a piece of sensing information obtained by sensing in an environment in which a plurality of users are present, and generating a response to at least any of the users depending on a result of analysis of the piece of sensing information.

A program executed by a computer of the present technology causes the computer to analyze a piece of sensing information obtained by sensing in an environment in which a plurality of users are present, and generate a response to at least any of the users depending on a result of analysis of the piece of sensing information.

In the present technology, a piece of sensing information obtained by sensing in an environment in which a plurality of users are present is analyzed, and a response to at least any of the users is generated depending on a result of analysis of the piece of sensing information.

### Advantageous Effects of Invention

According to the present technology, it will be possible to provide a space that can be satisfied by all of a plurality of users.

It should be noted that the effects described here are not necessarily limitative and may be any of effects described in the present disclosure.

### Brief Description of Drawings

[Fig. 1] Fig. 1 is a diagram illustrating an overview of a response system to which the present technology is applied.
[Fig. 2] Fig. 2 is a block diagram showing a hardware configuration example of an agent apparatus.
[Fig. 3] Fig. 3 is a block diagram showing a functional configuration example of the agent apparatus.
[Fig. 4] Fig. 4 is a flowchart illustrating response output processing.
[Fig. 5] Fig. 5 is a diagram showing examples of responses generated corresponding to clusters.
[Fig. 6] Fig. 6 is a diagram illustrating a first usage example of the response system.
[Fig. 7] Fig. 7 is a diagram showing examples of pieces of sensing information and response generations in the first usage example.
[Fig. 8] Fig. 8 is a diagram illustrating a second usage example of the response system.
[Fig. 9] Fig. 9 is a diagram showing examples of pieces of sensing information and response generations in the second usage example.
[Fig. 10] Fig. 10 is a diagram illustrating a third usage example of the response system.
[Fig. 11] Fig. 11 is a diagram showing examples of pieces of sensing information and response generations in the third usage example.
[Fig. 12] Fig. 12 is a diagram illustrating a fourth usage example of the response system.
[Fig. 13] Fig. 13 is a diagram showing examples of pieces of sensing information and response generations in the fourth usage example.
[Fig. 14] Fig. 14 is a diagram showing a configuration example of a neural network.
[Fig. 15] Fig. 15 is a block diagram showing a functional configuration example of a server to which the present technology is applied.
[Fig. 16] Fig. 16 is a block diagram showing a configuration example of a computer.

### Modes for Carrying Out the Invention

Hereinafter, embodiments of the present disclosure (hereinafter referred to as embodiments) will be described. Note that the descriptions will be performed in the following order.

1. Overview of response system
2. Structure and operation of agent apparatus
3. First usage example of response system (happy circle mode)
4. Second usage example of response system (individual action mode)
5. Third usage example of response system (disturber rush-in mode)
6. Fourth usage example of response system (party mode)
7. Application to neural network
8. Application to cloud computing
9. Others

### <1. Overview of response system>

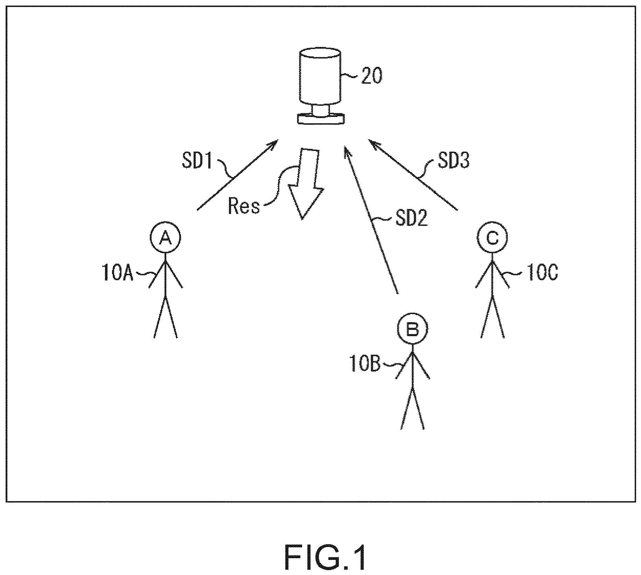

Fig. 1 shows an overview of a response system to which the present technology is applied.

Fig. 1 shows three users 10A, 10B, and 10C and an agent apparatus 20 to which the present technology is applied that outputs responses to the users 10A, 10B, 10C. The agent apparatus 20 includes a home use voice assistant device.

The agent apparatus 20 analyzes pieces of sensing information SD1, SD2, and SD3 obtained by sensing each status of the users 10A, 10B, and 10C and outputs a response Res corresponding to the analyzed results.

The pieces of the sensing information analyzed by the agent apparatus 20 are not limited to those obtained by sensing each status of the users 10A, 10B, and 10C and also include those obtained by sensing in an environment in which the users 10A, 10B, and 10C are present.

For example, the pieces of the sensing information include a captured image of the environment in which the users 10A, 10B, and 10C are present, voices in the environment, information showing positions or actions of the respective users 10A, 10B, and 10C, and the like.

The response Res output from the agent apparatus 20 is regarded as a response that creates a space where all the users 10A, 10B, and 10C are satisfied. The response Res may be a response to all the users 10A, 10B, and 10C or may be a response to any one of them. The response Res may be output as a music piece or a talk voice depending on the analyzed results of the pieces of the sensing information.

### <2. Structure and operation of agent apparatus>

### (Configuration example of agent apparatus)

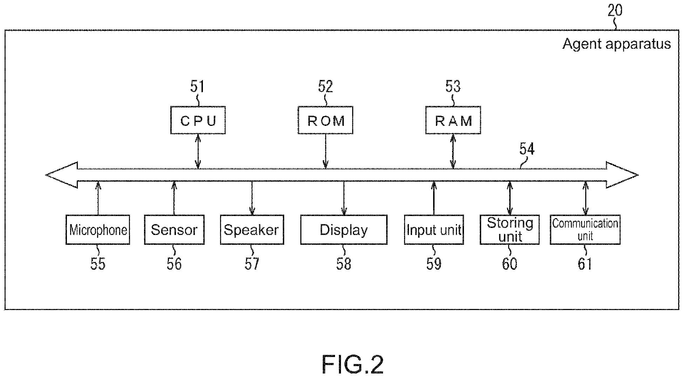

Fig. 2 is a block diagram showing a hardware configuration example of the agent apparatus 20 to which the present technology is applied.

A CPU (Central Processing Unit) 51, a ROM (Read Only Memory) 52, and a RAM (Random Access Memory) 53 are interconnected via a bus 54.

A microphone 55, a sensor 56, a speaker 57, a display 58, an input unit 59, a storing unit 60, and a communication unit 61 are connected to the bus 54.

The microphone 55 detects a voice in the environment in which users are present.

The sensor 56 includes a variety of sensors such as a camera and an illuminance sensor. For example, the sensor 56 outputs an image captured. In addition, the sensor 56 outputs information representing illuminance at the site.

The speaker 57 outputs a voice (synthesized voice) or a music piece.

The display 58 includes an LCD (Liquid Crystal Display), an organic EL (Electro Luminescence) display, or the like.

The input unit 59 includes a touch panel laminated on the display 58 and a variety of buttons provided on a housing of the agent apparatus 20. The input unit 59 detects an operation by a user and outputs information representing contents of the operation.

The storing unit 60 includes a non-volatile memory or the like. The storing unit 60 stores a variety of data such as music piece data and voice synthesizing data in addition to a program executed by a CPU 51.

The communication unit 61 includes a network interface or the like. The communication unit 61 communicates with external apparatuses wired or wirelessly.

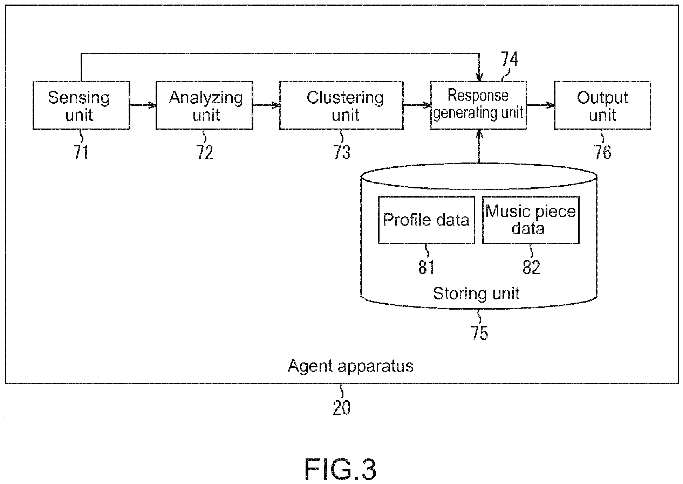

Fig. 3 is a block diagram showing a functional configuration example of the agent apparatus 20.

At least a part of functional blocks of the agent apparatus 20 shown in Fig. 3 is enabled by executing a predetermined program by the CPU 51 of Fig. 2.

The agent apparatus 20 includes a sensing unit 71, an analyzing unit 72, a clustering unit 73, a response generating unit 74, a storing unit 75, and an output unit 76.

The sensing unit 71 corresponds to the microphone 55 and the sensor 56 of Fig. 2 and performs sensing in the environment in which a plurality of users are present. The sensing unit 71 may be provided outside of the agent apparatus 20. Details about a sensing technology that can be performed by the sensing unit 71 will be described later. The pieces of the sensing information obtained by sensing are supplied to the analyzing unit 72 and the response generating unit 74.

The analyzing unit 72 analyzes the pieces of the sensing information from the sensing unit 71 and thereby estimates the status of the users in the environment in which the plurality of users are present. Specifically, the analyzing unit 72 analyzes the pieces of the sensing information and thereby estimates relationships among the users in the environment, whether or not the respective users share one goal, or the like. The analyzed results (estimated status of users) of the pieces of the sensing information is supplied to the clustering unit 73.

The clustering unit 73 clusters the analyzed results from the analyzing unit 72. Specifically, the clustering unit 73 determines a cluster into which the status of the users is classified. The information representing the determined cluster is supplied to the response generating unit 74.

The response generating unit 74 generates a response corresponding to the cluster represented by the information from the clustering unit 73. At this time, the response generating unit 74 generates a response corresponding to the cluster by using the pieces of the sensing information from the sensing unit 71, using the data stored in the storing unit 75, or the like.

The storing unit 75 corresponds to the storing unit 60 of Fig. 2 and stores profile data 81 that shows a user's individual taste and experience and music piece data 82 that represents a variety of music pieces. The response generating unit 74 generates the response corresponding to the cluster on the basis of the user's taste and experience or generates the response corresponding to the cluster on the basis of the music piece shown by the music piece data 82.

The response generated by the response generating unit 74 is supplied to the output unit 76.

The output unit 76 corresponds to the speaker 57 of Fig. 2 and outputs a response from the response generating unit 74 as a talk voice or a music piece.

### (Details about sensing technology)

Here, details about the sensing technology needed for providing the pieces of the sensing information will be described.

The sensing technology that can be performed by the sensing unit 71 includes the following technologies.

### (a) GPS (Global Positioning System) function

Position information can be acquired by a GPS function held by a user's portable device such as a smartphone and wearable equipment as a piece of the sensing information. The position information can be linked to the user's taste (selection tendency of favorable music piece). It becomes also possible to determine whether or not the current position of each user is a place the user often goes on a routine basis or where the user goes on a non-routine basis.

### (b) Acceleration sensing

Action information that represents a user's action can be acquired by an acceleration sensor held by a user's portable device such as a smartphone and wearable equipment as the piece of the sensing information. The action information can be linked to the user's taste.

### (c) Illuminance sensing

Illuminance at the site can be acquired or light source estimation can be performed by using the illuminance sensor provided in the environment in which the users are present as the piece of the sensing information. The illuminance or light source estimation result can be linked to the user's taste.

### (d) Sound source direction estimation

"Noisiness" at the site can be determined or sound source direction estimation can be performed by acquiring a voice detected by the microphone in the environment in which the user are present as the piece of the sensing information. As a result of the sound source direction estimation, it is also possible to specify kinds of sound sources, e.g., a child runs around, adults lively talk, a voice and sound are listened from TV, or the like.

Further, it can also determine that who talks, etc. by using a speaker recognition function.

### (e) Face recognition/action recognition

Face recognition and action recognition can be performed by acquiring an image (video) captured by a camera and analyzing in a real time as the piece of the sensing information. Information about who is present, what is doing, etc. acquired as a result of the face recognition or the action recognition may be acquired as the piece of the sensing information.

### (f) Line of sight detection

Line of sight information that shows a position of a line of sight of a user can be acquired by wearing an eye-glass type wearable equipment that can detect the line of sight or by capturing the user by a camera having a function that can detect the line of sight as the piece of the sensing information.

### (g) Heart rate variability detection

In a case where the user wears wristband-type wearable equipment capable of detecting changes in a heart rate, heart rate information showing changes in the heart rate can be acquired as the piece of the sensing information. Here, while the heart rate information is acquired, biological information such as an electrocardiogram, a blood pressure, and a body temperature may be acquired in addition thereto.

### (h) Facial expression recognition

In a case where an image (video) captured by a camera is acquired and analyzed in a real time as the piece of the sensing information, a facial expression can be recognized when the user talks.

### (i) Emotion estimation

In a case where a voice detected by a microphone is acquired when the user talks as the piece of the sensing information and a feature amount thereof is analyzed, the emotion of each user can be estimated.

### (j) User schedule information

Schedule information showing, for example, a user schedule or past action at that day can be acquired as the piece of the sensing information from calendar information, a To Do list, and the like of the user. By modelling the user schedule information, it is also possible to estimate a situation in which the user is. At this time, schedule information showing a short-term schedule such as "date" and a "concert" and schedule information showing a long-term schedule such as a "qualifying examination" may be distinguished and modelled. Further, the user schedule information may be modelled taking a user own habit into consideration.

### (k) Evaluation and number of reproducing times of music piece

An evaluation of video by other persons on a video sharing website can be acquired as the piece of the sensing information. Further, in a case where posted user information and tag information are acquired, it can be estimated whether or not the video includes mainly a music piece.

Also, an evaluation of the music piece by other persons in a music distribution service can be acquired as the piece of the sensing information. Further, in a case where other person's play list is referred, it can be estimated that a tendency of the other person who listens what a genre of music under what kind of timing.

Further, the number of reproducing times counted by a music piece reproduction in a music distribution service or a music piece off-line reproduction can be acquired as the piece of the sensing information.

### (l) Talk history

A talk history of a user can be acquired as the piece of the sensing information. The talk history may represent contents of talks among a plurality of users or may represent contents of a talk for a request to the agent apparatus 20.

### (m) Device information

Device information for showing a device that can output music pieces other than the agent apparatus 20 can be acquired as the piece of the sensing information. The device information is allowed to be stored on a cloud, for example. In this manner, responses can be selectively output from audio equipment in the environment in which a plurality of users are present or a smartphone or a portable music player belonging to an individual user.

### (n) Position information at home

Position information of users at home can be acquired by analyzing an image captured by the camera of the agent apparatus 20 as the piece of the sensing information.

In addition, in a case where a thermography camera, a human sensor, or the like is installed and a resultant thermography image or sensor output is analyzed, position information about humans outside a capturing range of the camera can be acquired as the piece of the sensing information. In this manner, it will be possible to recognize humans in a bathroom or the like on which the agent apparatus 20 is difficult to be installed. Note that since it is in a home, it is also possible to specify who are the humans (family) outside the capturing range of the camera.

### (o) ON/OFF situation

By acquiring an ON/OFF situation of home appliances (cooling/heating appliance, lighting equipment) in a home as the piece of the sensing information, position information about users in the home can be acquired.

Through the above-described sensing technology, a variety of pieces of the sensing information can be acquired.

### (Action example of agent apparatus)

Next, with reference to a flowchart of Fig. 3, a flow of response output processing executed by the agent apparatus 20 will be described.

In Step S1, the sensing unit 71 performs sensing in the environment in which a plurality of users are present and thereby acquires the pieces of the sensing information.

In Step S2, the analyzing unit 72 analyzes the pieces of the sensing information obtained from the sensing unit 71 and thereby estimates the status of the users in the environment in which the plurality of users are present.

In Step S3, the clustering unit 73 clusters the analyzed results from the analyzing unit 72, classifies the status of the users and thereby determines the cluster into which the status is classified.

In Step S4, the response generating unit 74 generates a response corresponding to the determined cluster by using the pieces of the sensing information from the sensing unit 71 or by using the profile data 81 stored in the storing unit 75.

Note that it is thought that some of the plurality of users may have no profile data 81. In this case, the response generating unit 74 can generate the response corresponding to the cluster by using profile data (generalized profile) generalized depending on attributes (gender, age, etc.) of the users.

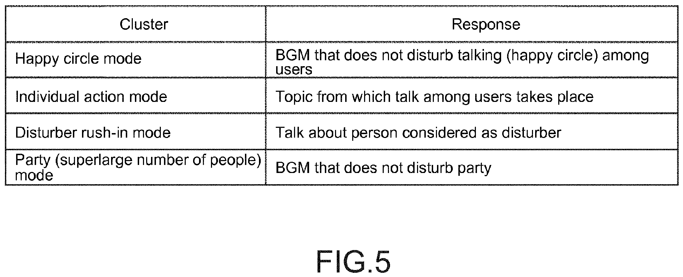

Here, with reference to Fig. 5, examples of responses generated corresponding to a determined cluster will be described.

Fig. 5 shows four modes (happy circle mode, individual action mode, disturber rush-in mode, party mode) classifying the status of the plurality of users and examples of the responses corresponding to the respective modes.

The happy circle mode is a cluster applicable to a status that a plurality of users talk happily each other. In a case where the status of the users is classified into the happy circle mode, a BGM (Back Ground Music) (music piece) that does not disturb a talk (happy circle) among users is selected as a response, for example.

The individual action mode is a cluster applicable to a status that a plurality of users work different tasks with no talk. In a case where the status of the users is classified into the individual action mode, a topic (talk voice) from which a talk among users takes place is generated as the response, for example.

The disturber rush-in mode is a cluster applicable to a status that while several users work a single task, another user takes an action to disturb the task. In a case where the status of the users is classified into the disturber rush-in mode, a talk (talk voice) about the person considered as disturber is generated as the response, for example.

The party (super large number of people) mode is a cluster applicable to a status that a super large number of people are in blast (talk in a loud voice, moving around) in a party venue or the like. In a case where the status of the users is classified into the party mode, the BGM (music piece) that does not disturb the party (blast) is selected as the response, for example.

Thus, the responses corresponding to the status of the plurality of users will be generated.

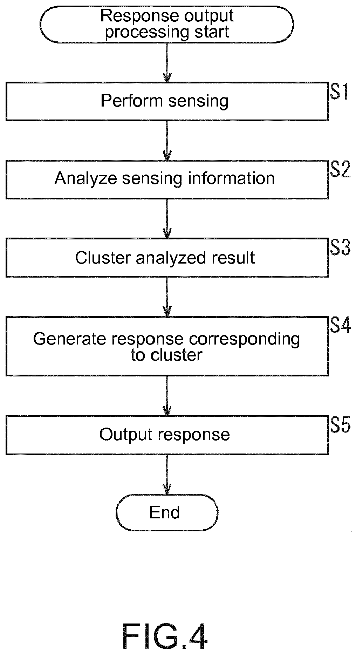

Back to the flowchart of Fig. 4, in Step S5, the output unit 76 outputs the responses generated by the response generating unit 74.

According to the above processing, since the responses corresponding to the status of the plurality of users are output depending on the analyzed results of the pieces of the sensing information obtained by sensing in the environment in which the plurality of users are present, it will be possible to provide a space that can be satisfied by all of a plurality of users.

Hereinafter, usage examples of the above-described response system will be described.

### <3. First usage example of response system>

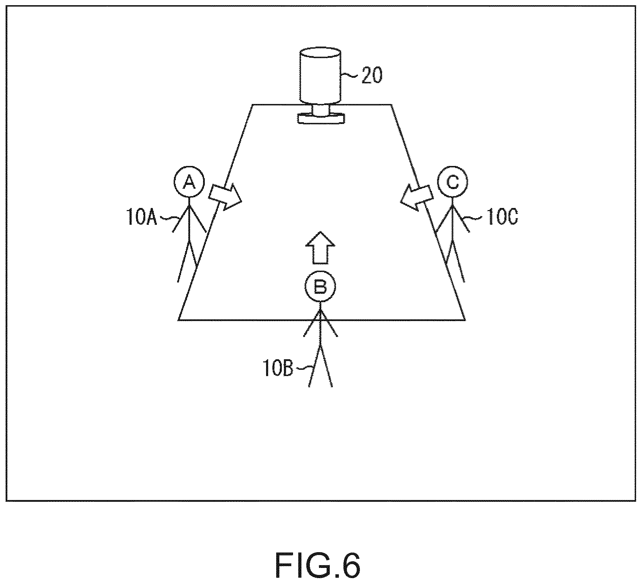

Fig. 6 is a diagram illustrating a first usage example of the response system to which the present technology is applied.

Fig. 6 shows a state that the three users 10A, 10B, and 10C lively talk face-to-face in a living room of a home on which the agent apparatus 20 is installed.

The user 10A wears wristband-type wearable equipment capable of detecting changes in a heart rate and heart rate information of the user 10A is acquired by the agent apparatus 20 in a real time as the piece of the sensing information.

The user 10B wears an eye-glass type wearable equipment that can detect a line of sight and line of sight information of the user 10B is acquired by the agent apparatus 20 in a real time as the piece of the sensing information.

The agent apparatus 20 stores the profile data of the users 10A and 10B as the profile data 81 and no profile data of the user 10C is present. For example, the user 10C may be a guest who does not live in the home at ordinary times.

In the example of Fig. 6, the analyzing unit 72 analyzes a variety of the pieces of the sensing information and thereby estimates the status of the users 10A, 10B, and 10C. The pieces of the sensing information herein used include those obtained by using, for example, (d) sound source direction estimation, (e) face recognition/action recognition, (f) line of sight detection, (g) heart rate variability detection, and (h) facial expression recognition as the sensing technology.

On the basis of the pieces of the sensing information, it is estimated that the status is such that the users 10A, 10B, and 10C talk happily each other, which is classified into the happy circle mode as the cluster.

The response generating unit 74 generates a response corresponding to the happy circle mode by using a variety of the pieces of the sensing information and the profile data of the users 10A and 10B. The pieces of the sensing information herein used include those obtained by using, for example, (c) illuminance sensing, (h) facial expression recognition, (i) emotion estimation, (j) user schedule information, (k) evaluation and number of reproducing times of music piece, and (l) talk history as the sensing technology.

Thus, as the response corresponding to the happy circle mode, a BGM that does not disturb a talk among users is selected.

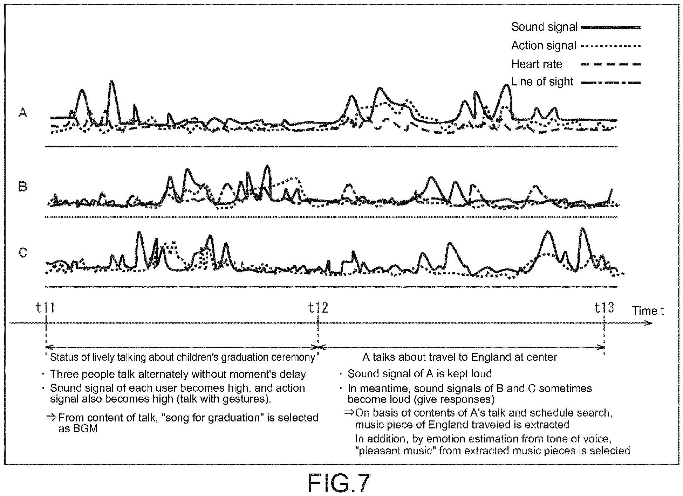

Fig. 7 is a diagram illustrating the pieces of sensing information obtained in the environment shown in Fig. 6 and examples of response generations by the agent apparatus 20.

Fig. 7 shows the pieces of the sensing information about the users 10A, 10B, and 10C obtained between times t11 and 13.

A of Fig. 7 shows waveforms that represent a sound signal (solid line), an action signal (dotted line), and heart rate information (broken line) of the user 10A. B of Fig. 7 shows waveforms that represent the sound signal, the action signal, and the line of sight information (long dashed short dashed line) of the user 10B. C of Fig. 7 shows waveforms that represent the sound signal and the action signal of the user 10C.

The sound signal of each user represents a voice detected by the microphone and the action signal of each user is obtained on the basis of the image captured by the camera or the sensor output of the acceleration sensor.

In the example of Fig. 7, the three users 10A, 10B, and 10C have a lively talk about their children's graduation ceremony between the times t11 and t12.

During the period, in the pieces of the sensing information, the sound signals of the three users 10A, 10B, and 10C become high at different timings. From this, it is estimated that the three users 10A, 10B, and 10C talk alternately at a good tempo. In addition, when the sound signal of each user becomes high, the action signal is also amplified. From this, it is estimated that the respective users talk with gestures.

Specifically, it is estimated that the status of the users 10A, 10B, and 10C is such that the plurality of users talk happily each other, which is classified into the happy circle mode as the cluster.

In this case, as the response corresponding to the happy circle mode, a "song for graduation" is selected as the BGM from contents of the talk ((l) talk history) obtained as the piece of the sensing information.

Next, between the times t12 and t13, the user 10A talks about a travel to England at the center.

During the period, in the pieces of the sensing information, the sound signal of the user 10A is kept high. In the meantime, the sound signals of the users 10B and 10C sometimes become high. From this, it is estimated that the user 10A talks at the center and the users 10B and 10C listen and give responses.

Here, it is also estimated that the status of the users 10A, 10B, and 10C is such that the plurality of users talk happily each other, which is classified into the happy circle mode as the cluster

In this case, as the response corresponding to the happy circle mode, a music piece of England to which the user 10A traveled is extracted on the basis of content of A's talk ((l) talk history) and a schedule search ((j) user schedule information) obtained as the pieces of the sensing information.

Further, a "pleasant music" is selected from extracted England music pieces as a BGM on the basis of a pleasant voice tone ((i) emotion estimation) of the user 10A obtained as the pieces of the sensing information.

Thus, even in a case where a plurality of users lively talk face-to-face, it will provide a space that can be satisfied by all users.

### <4. Second usage example of response system>

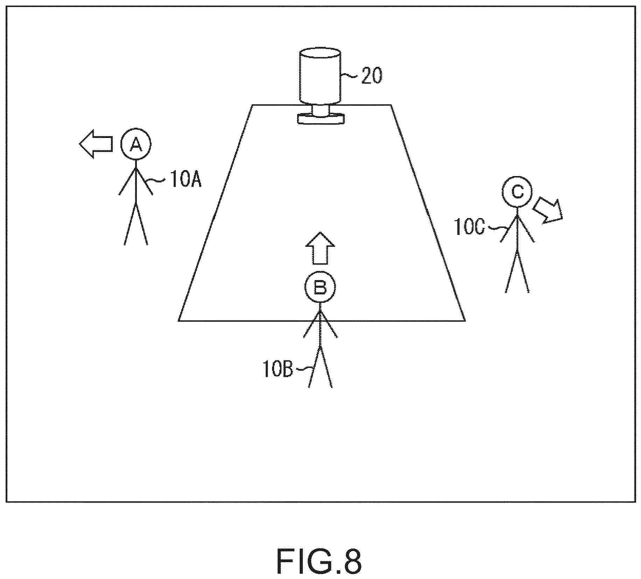

Fig. 8 is a diagram illustrating a second usage example of the response system to which the present technology is applied.

Fig. 8 shows a state that the three users 10A, 10B, and 10C work different tasks, for example, read books, operate smartphones, or the like, in the living room of the home on which the agent apparatus 20 is installed.

Also in the example of Fig. 8, the pieces of the sensing information and the stored profile data of the respective users 10A, 10B, and 10C are similar to those in the example of Fig. 6.

In the example of Fig. 8, the analyzing unit 72 analyzes a variety of the pieces of the sensing information and thereby estimates the status of the users 10A, 10B, and 10C. The pieces of the sensing information herein used include those obtained by using, for example, (d) sound source direction estimation, (e) face recognition/action recognition, (f) line of sight detection, (g) heart rate variability detection, and (h) facial expression recognition as the sensing technology.

On the basis of the pieces of the sensing information, it is estimated that the status is such that the users 10A, 10B, and 10C work different tasks with no talk, which is classified into the individual action mode as the cluster.

The response generating unit 74 generates a response corresponding to the individual action mode by using a variety of the pieces of the sensing information and the profile data of the users 10A and 10B. The pieces of the sensing information herein used include those obtained by using, for example, (c) illuminance sensing, (j) user schedule information, (k) evaluation and number of reproducing times of music piece, and (l) talk history as the sensing technology.

Thus, as the response corresponding to the individual action mode, a topic from which a talk among users takes place is generated as the response corresponding to the individual action mode.

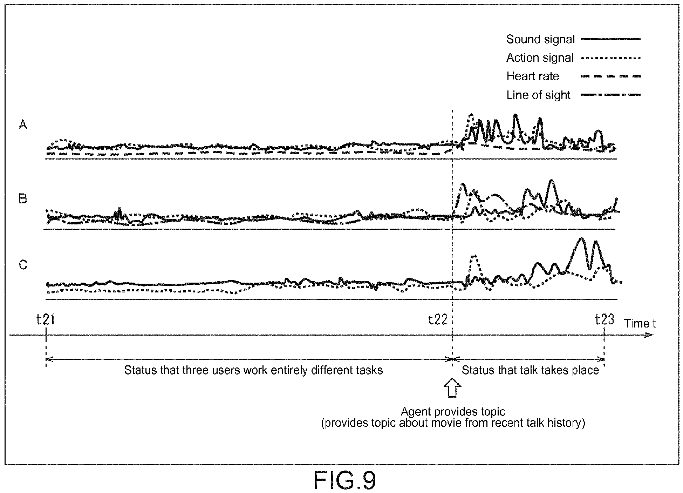

Fig. 9 is a diagram illustrating the pieces of sensing information obtained in the environment shown in Fig. 8 and examples of response generations by the agent apparatus 20.

Fig. 9 shows the pieces of the sensing information about the users 10A, 10B, and 10C obtained between times t21 and t23.

Note that the pieces of the sensing information represented by waveforms A, B, and C shown in Fig. 9 are similar to those illustrated in Fig. 7.

Fig. 9 illustrates a status that the three users 10A, 10B, and 10C work entirely different tasks between the times t21 and t22.

During the period, since all signals of the three users 10A, 10B, and 10C are low and not changed in the pieces of the sensing information, it is estimated that the respective three users 10A, 10B, and 10C don't talk and move and are quiet.

Specifically, it is estimated that a plurality of the users 10A, 10B, and 10C work different tasks with no talk and such a status is classified into the individual action mode as the cluster.

In this case, as the response corresponding to the individual action mode, a topic about movie is generated from a recent talk history ((l) talk history) obtained as the piece of the sensing information. At the time t22, the users 10A, 10B, and 10C are provided with the topic.

As a result, a talk among users 10A, 10B, 10C takes place between the times t22 and t23. Specifically, the sound signals and the action signals of the respective users 10A, 10B, and 10C are greatly changed.

Thus, even in a case where a plurality of users work different tasks, it will provide a space that can be satisfied by all users.

### <5. Third usage example of response system>

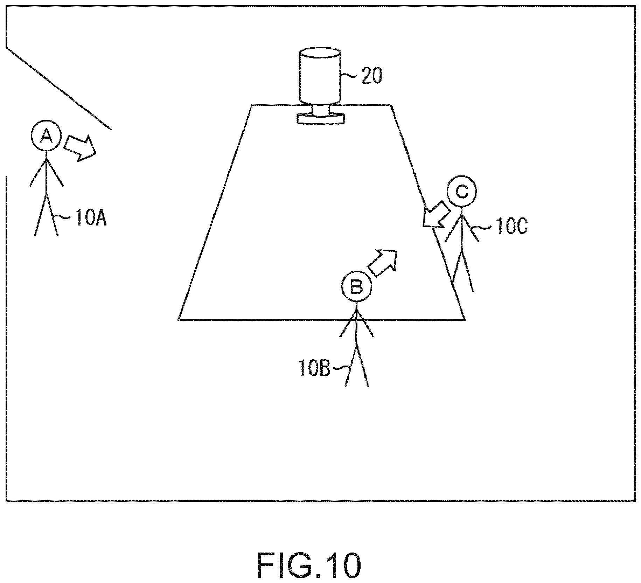

Fig. 10 is a diagram illustrating a third usage example of the response system to which the present technology is applied.

Fig. 10 shows a state that while the two users 10B and 10C work a single task, i.e., assemble goods, in the living room of the home on which the agent apparatus 20 is installed, the user 10A enters into the room from outside and talks to the users 10B and 10C.

Also in the example of Fig. 10, the pieces of the sensing information and the stored profile data of the respective users 10A, 10B, and 10C are similar to those in the example of Fig. 6.

In the example of Fig. 10, the analyzing unit 72 analyzes a variety of the pieces of the sensing information and thereby estimates the status of the users 10A, 10B, and 10C. The pieces of the sensing information herein used include those obtained by using, for example, (d) sound source direction estimation, (e) face recognition/action recognition, (f) line of sight detection, (g) heart rate variability detection, and (h) facial expression recognition as the sensing technology.

On the basis of the pieces of the sensing information, it is estimated that the status is such that while several users work a single task, another user takes an action to disturb the task, which is classified into the disturber rush-in mode as the cluster.

The response generating unit 74 generates a response corresponding to the disturber rush-in mode by using a variety of the pieces of the sensing information and the profile data of the users 10A and 10B. The pieces of the sensing information herein used include those obtained by using, for example, (h) facial expression recognition, (j) user schedule information, and (l) talk history as the sensing technology.

Thus, as the response corresponding to the disturber rush-in mode, a topic about a person determined as the disturber is generated.

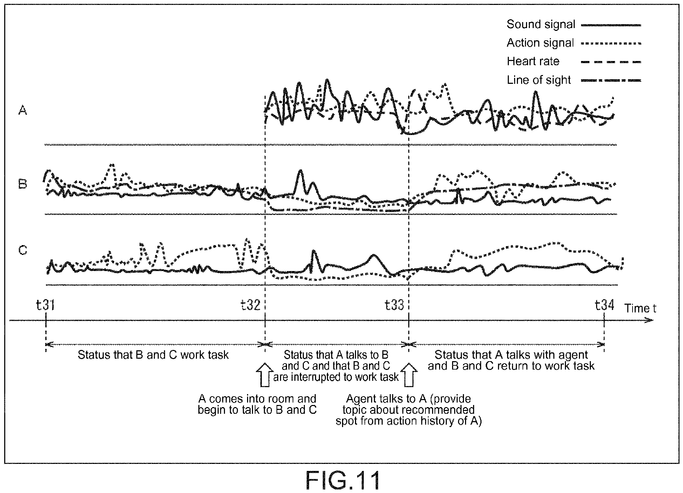

Fig. 11 is a diagram illustrating the pieces of sensing information obtained in the environment shown in Fig. 10 and examples of response generations by the agent apparatus 20.

Fig. 11 shows the pieces of the sensing information about the users 10A, 10B, and 10C obtained between times t31 and t34.

Note that the pieces of the sensing information represented by waveforms A, B, and C shown in Fig. 11 are similar to those illustrated in Fig. 7.

Fig. 11 illustrates a status that the two users 10B and 10C work a single task between the times t31 and t32.

During the period, since the sound signals of the users 10B and 10C are low and the action signal of the users 10B and 10C are some greatly changed in the pieces of the sensing information, it is estimated that the two users 10B and 10C work for a task with no talk. Since the user 10A is outside a sensing range by the agent apparatus 20, no piece of the sensing information is acquired.

At the time t32, the user 10A comes into a room and begins to talk to the users 10B and 10C. Between the times t32 and t33, the status is such that the user 10A talks to the users 10B and 10C and the users 10B and 10C are interrupted to work the task.

During the period, since the sound signal and the action signal of the user 10A are greatly changed in the piece of the sensing information, it is estimated that the user 10A talks with gestures. In addition, since the changes of the sound signals of the users 10B and 10C become great but the changes of the action signals of the users 10B and 10C become small, it is estimated that the two users 10B and 10C are interrupted to work the task for a talk with the user 10A.

Specifically, the status of the users 10A, 10B, and 10C is, for example, that several users work the single task and another user takes an action of disturbing the task, and the status is classified into the disturber rush-in mode as the cluster.

In this case, as the response corresponding to the disturber rush-in mode, a topic about a recommended spot is generated on the basis of an action history of the user 10A ((j) user schedule information) acquired as the piece of the sensing information and at the time t33, and the user 10A is provided with the topic. The recommended spot is, for example, a town or the like in which the user 10A is likely to be interested that is estimated from the action history of the user 10A.

As a result, between the times t33 and t34, the status is that the user 10A talks with the agent apparatus 20 and the users 10B and 10C return to work the task.

Specifically, while the sound signal of the user 10A continues to be greatly changed, the changes of the sound signals of the users 10B and 10C become small and the changes of the action signals of the users 10B and 10C become some great.

Thus, even in a case where, while in a status that two users work a single task, one user comes into a room from outside and begins to talk to the two users, it will provide a space that can be satisfied by all users.

### <6. Fourth usage example of response system>

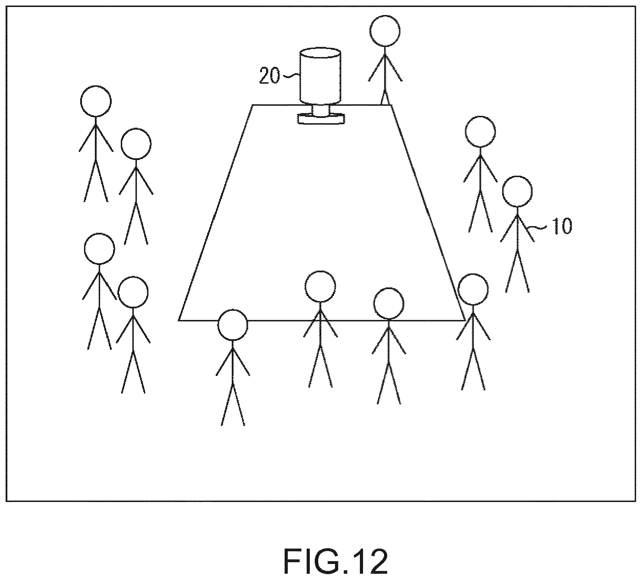

Fig. 12 is a diagram illustrating a fourth usage example of the response system to which the present technology is applied.

Fig. 12 shows a state that a large number of users 10 participate in a party in the living room of the home on which the agent apparatus 20 is installed.

In the example of Fig. 12, the analyzing unit 72 analyzes a variety of the pieces of the sensing information and thereby estimates the status of all users 10, i.e., a status of a whole room. The pieces of the sensing information herein used include those obtained by using, for example, (b) acceleration sensing, (d) sound source direction estimation, (e) face recognition/action recognition, (f) line of sight detection, and (g) heart rate variability detection as the sensing technology.

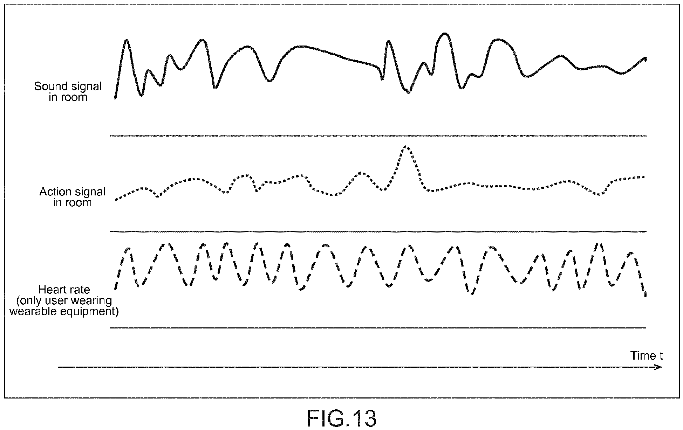

Fig. 13 is a diagram illustrating the pieces of the sensing information acquired in the environment shown in Fig. 12.

Fig. 13 shows waveforms that represent sound signals (solid lines), action signals (dotted lines), and heart rate information (broken line) in the whole room (all users 10) in this order from above. The heart rate information is acquired only from the user 10 wearing wristband-type wearable equipment capable of detecting changes in the heart rate.

In Fig. 13, each of the sound signal, the action signal, and the heart rate information in the whole room is changed while taking a high level. From this, it is estimated that the status of each user 10 (status of whole room) is in blast in the party venue or the like, which is classified into the party mode as the cluster.

The response generating unit 74 generates a response corresponding to the party mode by using a variety of the pieces of the sensing information. The pieces of the sensing information herein used include those obtained by using, for example, (c) illuminance sensing, (j) user schedule information, (k) evaluation and number of reproducing times of music piece, and (n) position information at home as the sensing technology.

Thus, as the response corresponding to the party mode, a BGM that does not disturb the party is selected.

Thus, even in a case where a large number of users participate in the party, it will provide a space that can be satisfied by all users.

Note that, in the above-described examples, the present technology is applied to the agent apparatus 20 included as a voice assistant device, but may be applied to a mobile terminal such as a smartphone.

### <7. Application to neural network>

The present technology is applicable to a neural network.

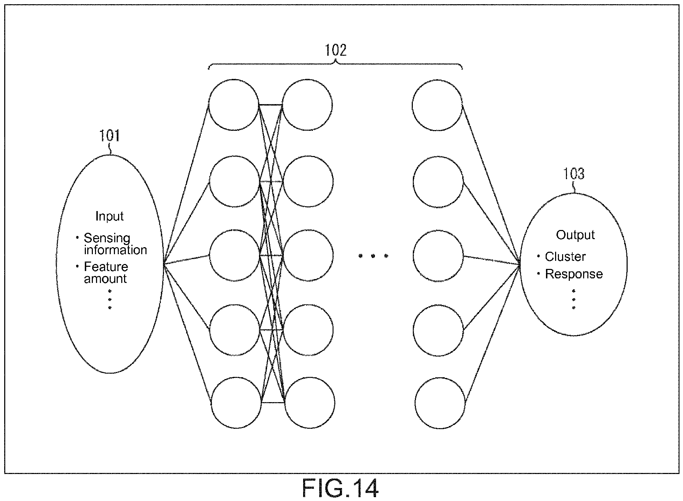

Fig. 14 is a diagram showing a configuration example of a neural network.

The neural network of Fig. 14 is a hierarchical type neural network including an input layer 101, an intermediate layer 102, and an output layer 103.

The above-described pieces of the sensing information, the feature amounts obtained by analyzing the pieces of the sensing information, and the like are input to the input layer 101.

In the intermediate layer 102, operations such as analysis of the pieces of the sensing information, the feature amounts, and the like input to the input layer 101, clustering of the analyzed result, and responses generations corresponding to the cluster are performed in each neuron.

The cluster into which the status of the users is classified and the responses corresponding to the clusters as a result of the operations in the intermediate layer 102 are output to the output layer 103.

Thus, the present technology is applicable to the hierarchical type neural network.

### <8. Application to cloud computing>

The present technology is also applicable to cloud computing.

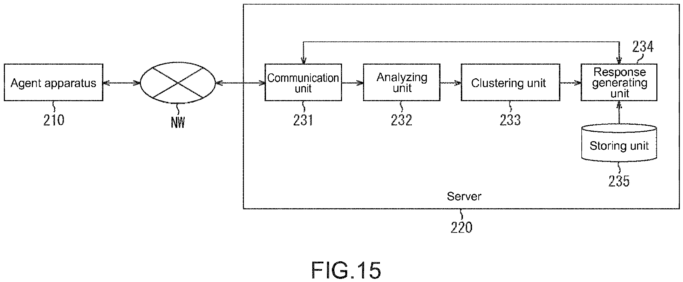

For example, as shown in Fig. 15, an agent apparatus 210 performs sensing in the environment in which the plurality of users are present and transmits the resultant pieces of the sensing information to a server 220 connected via a network NW. Further, the agent apparatus 210 outputs the responses to the users transmitted via the network NW as talk voices or music pieces.

A server 120 includes a communication unit 231, an analyzing unit 232, a clustering unit 233, a response generating unit 234, and a storing unit 235.

The communication unit 231 receives the pieces of the sensing information transmitted from the agent apparatus 210 via the network NW. In addition, the communication unit 231 transmits the responses generated by the response generating unit 234 to the agent apparatus 210 via the network NW.

The analyzing unit 232 has the same functions as the analyzing unit 72 of Fig. 3, analyzes the pieces of the sensing information from the communication unit 231, and thereby estimates the status of the users in the environment in which the plurality of users are present.

A clustering unit 233 has the same functions as the clustering unit 73 of Fig. 3 and determines the cluster into which the status of the users is classified.

A response generating unit 234 has the same function as the response generating unit 74 of Fig. 3, generates the responses corresponding to the classified cluster, and supplies it to the communication unit 231.

A storing unit 235 has the same function as the storing unit 75 of Fig. 3 and stores profile data showing the user's individual taste and experience and music piece data representing a variety of music pieces.

With this structure, it will be possible to provide a space that can be satisfied by all of a plurality of users.

### <9. Others>

The above-described series of processing may be executed by hardware or software. In a case where the series of processing is executed by software, a program of the software is installed from a program recording medium to a computer built in dedicated hardware or a general-purpose personal computer.

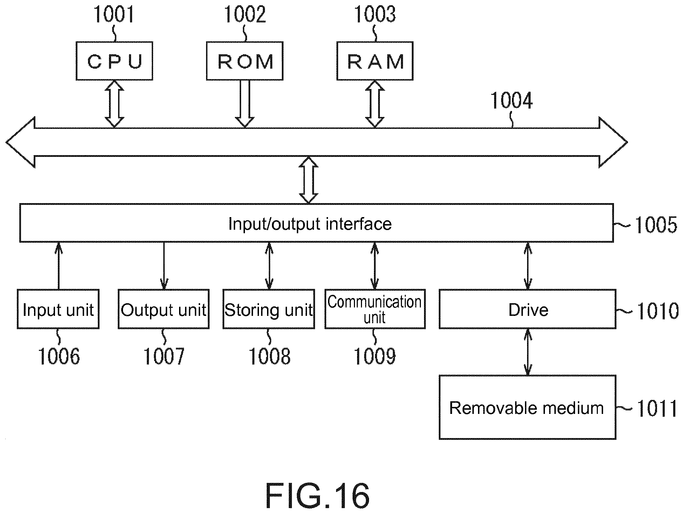

Fig. 16 is a block diagram showing a configuration example of the hardware of the computer including the program that executes the above-described series of processing.

The above-described agent apparatus 20 and the server 220 are enabled by the computer having the structure shown in Fig. 16.

A CPU 1001, a ROM 1002, and a RAM 1003 are interconnected via a bus 1004.

An input-output interface 1005 is further connected to the bus 1004. An input unit 1006 including a keyboard, a mouse, and the like and an output unit 1007 including a display, a speaker, and the like are connected to the input-output interface 1005. In addition, a storing unit 1008 including a hard disc, a non-volatile memory, and the like, a communication unit 1009 including a network interface, and a drive 1010 for driving a removable medium 1011 are connected to the input-output interface 1005.

In the computer configured as described above, the CPU 1001 loads and executes the program stored in the storing unit 1008 to/on the RAM 1003 via the interface 1005 and the bus 1004, and the above-described series of processing is performed, for example.

The program executed by the CPU 1001 is recorded in the removable medium 1011 or is provided through a wired or wireless transmission medium such as a local area network, the Internet, and digital broadcasting and is installed to the storing unit 1008.

Note that the program executed by the computer may be a program that executes processing in time series in the order described in the present specification or may be a program that executes processing in a timely fashion, e.g., in parallel or when invoking.

Note that the embodiments of the present technology are not limited to the above-described embodiments. Various modifications and alterations of may be available without departing from the spirit and scope of the present technology.

Effects described herein are not limited only to be illustrative, there may be effects other than those described herein.

The present technology may have the following structures.
(1) An information processing apparatus, including:
   an analyzing unit that analyzes a piece of sensing information obtained by sensing in an environment in which a plurality of users are present; and
   a response generating unit that generates a response to at least any of the users depending on a result of analysis of the piece of sensing information.
(2) The information processing apparatus according to (1), in which
   the analyzing unit estimates a status of the users in the environment by analyzing the piece of the sensing information, and
   the response generating unit generates the response corresponding to the estimated status of the users.
(3) The information processing apparatus according to (2), further including:
   a clustering unit that clusters the status of the users and thereby determines a cluster into which the status of the users is classified, in which
   the response generating unit generates the response corresponding to the determined cluster.
(4) The information processing apparatus according to (3), in which
   the response generating unit generates the response corresponding to the cluster by using the piece of the sensing information.
(5) The information processing apparatus according to (3) or (4), in which
   the response generating unit generates the response corresponding to the cluster by using each profile of the users.
(6) The information processing apparatus according to (5), in which
   the response generating unit generates the response corresponding to the cluster by using a generalized profile depending on an attribute of the user having no profile in a case where the user having no profile is present in the users.
(7) The information processing apparatus according to any of (1) to (6), in which
   the response is a music piece.
(8) The information processing apparatus according to any of (1) to (6), in which
   the response is a talk voice.
(9) The information processing apparatus according to any of (1) to (8), in which
   the piece of the sensing information includes a captured image of the environment.
(10) The information processing apparatus according to any of (1) to (68, in which
   the piece of the sensing information includes a voice detected in the environment.
(11) The information processing apparatus according to any of (1) to (8), in which
   the piece of the sensing information includes a line of sight of each of the users.
(12) The information processing apparatus according to any of (1) to (8), in which
   the piece of the sensing information includes biological information of each of the users.
(13) The information processing apparatus according to any of (1) to (8), in which
   the piece of the sensing information includes position information of each of the users.
(14) The information processing apparatus according to any of (1) to (8), in which
   the piece of the sensing information includes action information of each of the users.
(15) The information processing apparatus according to any of (1) to (8), in which
   the piece of the sensing information includes illuminance in the environment.
(16) The information processing apparatus according to any of (1) to (8), in which
   the piece of the sensing information includes schedule information of each of the users.
(17) The information processing apparatus according to any of (1) to (8), in which
   the piece of the sensing information includes a talk history of each of the users.
(18) The information processing apparatus according to any of (1) to (17), further including:
   a sensing unit that performs sensing in the environment.
(19) The information processing apparatus according to any of (2) to (18), in which
   the response generating unit generates the response that does not disturb a talk among the users in a case where it is estimated that the status of the users is such that the plurality of users talk happily each other.
(20) The information processing apparatus according to any of (2) to (18), in which
   the response generating unit generates the response from which a talk among users takes place in a case where it is estimated that the status of the users is such that the plurality of users work different tasks.
(21) The information processing apparatus according to any of (2) to (18), in which
   the response generating unit generates the response to a first user in a case where it is estimated that the status of the users is such that the first user takes an action of disturbing a task being performed by a second user.
(22) The information processing apparatus according to any of (2) to (18), in which
   the response generating unit generates the response that does not disturb a blast in a case where it is estimated that the status of the users is such that a super large number of people are in blast.
(23) An information processing method executed by an information processing apparatus, including:
   analyzing a piece of sensing information obtained by sensing in an environment in which a plurality of users are present; and
   generating a response to at least any of the users depending on a result of analysis of the piece of sensing information.
(24) A program executed by a computer, the program causing the computer to
   analyze a piece of sensing information obtained by sensing in an environment in which a plurality of users are present; and
   generate a response to at least any of the users depending on a result of analysis of the piece of sensing information.

### Reference Signs List

- 20: agent apparatus
- 71: sensing unit
- 72: analyzing unit
- 73: clustering unit
- 74: response generating unit
- 75: storing unit
- 76: output unit
- 210: agent apparatus
- 220: server
- 231: communication unit
- 232: analyzing unit
- 233: clustering unit
- 234: response generating unit
- 235: storing unit

## Claims

1. An information processing apparatus, comprising:
an analyzing unit that analyzes a piece of sensing information obtained by sensing in an environment in which a plurality of users are present; and
a response generating unit that generates a response to at least any of the users depending on a result of analysis of the piece of sensing information.

2. The information processing apparatus according to claim 1, wherein
the analyzing unit estimates a status of the users in the environment by analyzing the piece of the sensing information, and
the response generating unit generates the response corresponding to the estimated status of the users.

3. The information processing apparatus according to claim 2, further comprising:
a clustering unit that clusters the status of the users and thereby determines a cluster into which the status of the users is classified, wherein
the response generating unit generates the response corresponding to the determined cluster.

4. The information processing apparatus according to claim 3, wherein
the response generating unit generates the response corresponding to the cluster by using the piece of the sensing information.

5. The information processing apparatus according to claim 3, wherein
the response generating unit generates the response corresponding to the cluster by using each profile of the users.

6. The information processing apparatus according to claim 5, wherein
the response generating unit generates the response corresponding to the cluster by using a generalized profile depending on an attribute of the user having no profile in a case where the user having no profile is present in the users.

7. The information processing apparatus according to claim 1, wherein
the response is a music piece.

8. The information processing apparatus according to claim 1, wherein
the response is a talk voice.

9. The information processing apparatus according to claim 1, wherein
the piece of the sensing information includes a captured image of the environment.

10. The information processing apparatus according to claim 1, wherein
the piece of the sensing information includes a voice detected in the environment.

11. The information processing apparatus according to claim 1, wherein
the piece of the sensing information includes a line of sight of each of the users.

12. The information processing apparatus according to claim 1, wherein
the piece of the sensing information includes biological information of each of the users.

13. The information processing apparatus according to claim 1, wherein
the piece of the sensing information includes position information of each of the users.

14. The information processing apparatus according to claim 1, wherein
the piece of the sensing information includes action information of each of the users.

15. The information processing apparatus according to claim 1, wherein
the piece of the sensing information includes illuminance in the environment.

16. The information processing apparatus according to claim 1, wherein
the piece of the sensing information includes schedule information of each of the users.

17. The information processing apparatus according to claim 1, wherein
the piece of the sensing information includes a talk history of each of the users.

18. The information processing apparatus according to claim 1, further comprising:
a sensing unit that performs sensing in the environment.

19. An information processing method executed by an information processing apparatus, comprising:
analyzing a piece of sensing information obtained by sensing in an environment in which a plurality of users are present; and
generating a response to at least any of the users depending on a result of analysis of the piece of sensing information.

20. A program executed by a computer, the program causing the computer to
analyze a piece of sensing information obtained by sensing in an environment in which a plurality of users are present; and
generate a response to at least any of the users depending on a result of analysis of the piece of sensing information.
